# EUROPEAN PATENT SPECIFICATION

(11) **EP 0 427 441 B1**
(45) Date of publication and mention of the grant of the patent: **13.03.1996**
(21) Application number: 90311888.3
(22) Date of filing: 30.10.1990
(51) Int. Cl.: G11B 7/18

(54) **Objective lens actuator**
Antriebseinheit für Objektivlinse
Positionneur pour objectif

(30) Priority: 10.11.1989 JP 291183/89
(43) Date of publication of application: 15.05.1991
(73) Proprietor: CANON KABUSHIKI KAISHA, Tokyo (JP)
(72) Inventor: Yoshikawa, Kikuo, c/o Canon Kabushiki Kaisha, Ohta-ku, Tokyo (JP)
(74) Representative: Beresford, Keith Denis Lewis

(56) References cited:
- EP-A- 0 212 941
- EP-A- 0 371 799
- US-A- 4 818 066

## Description

The present invention relates to an objective lens actuator for performing focusing control or tracking control in an optical pickup device used in a compact disk player, an optical video disk player, an optical disk device, and the like.

When a beam emitted from a light source is to be focused in a mode for optically recording information from an optical disk or reproducing it from the disk, the actuator performs so-called focus control so that an in-focus point of a focused beam (to be referred to as a beam spot thereinafter) traces a disk recording surface in accordance with changes in surface level of the disk. At the same time, the actuator performs so-called tracking control so that the beam spot traces recording tracks in accordance with eccentricity of the recording tracks.

When a target track is to be accessed, an optical head is moved by a linear motor to a predetermined position, and an objective lens position is then finely adjusted.

In order to perform the above control operations, the actuator comprises a means for driving an objective lens in a direction of thickness of the optical disk (i.e., an optical axis of the objective lens) and a means for driving the objective lens in a radial direction of the optical disk (i.e., a direction perpendicular to the optical axis) to perform tracking control or fine adjustment for accessing the target track.

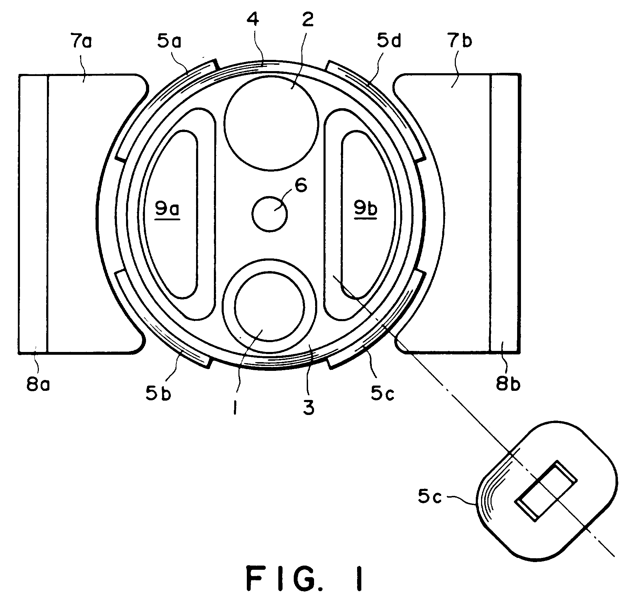

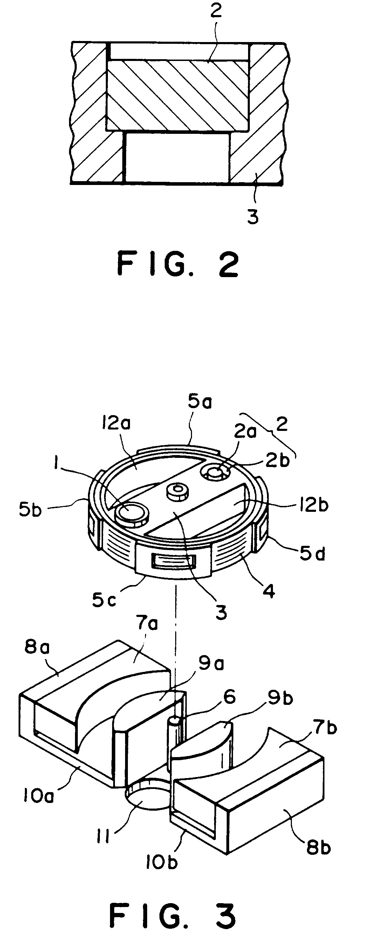

A conventional example of an actuator having the above arrangement is shown in Fig. 1. An objective lens 1 is fixed in a lens holder 3. The lens holder 3 is held on a support shaft 6 at the central portion of the lens holder 3 so as to be slidable in the axial direction and pivotal in the direction of rotation. The shaft 6 is counted on a base (not shown). A balance weight 2 is mounted in the lens holder 3 to be axially symmetrical with the objective lens 1, so that the center of gravity of the lens holder 3 is located at the axial center of the support shaft 6 (see Fig. 2). A focusing coil 4 is wound around the outer circumferential surface of the lens holder 3. Tracking coils 5a, 5b, 5c, and 5d are mounted in the peripheral portion of the lens holder 3 at predetermined angular intervals. In order to generate a magnetic field crossing the coils 4, 5a, 5b, 5c, and 5d, magnets 7a and 7b are located on both sides of the lens holder 3. The magnets 7a and 7b are supported on outer yokes 8a and 8b. Inner yokes 9a and 9b are continuous with the outer yokes 8a and 8b on their bottom surfaces. The inner yokes 9a and 9b are inserted into through holes 12a and 12b formed in the lens holder 3.

During focusing control, when a current is Ssupplied to the focusing coil 4 in a clockwise or counterclockwise directionl an electromagnetic force acts in a direction of the support shaft 6 in a gap formed between the left and right magnetic circuits (constituted by the magnets 7a and 7b, the outer yokes 8a and 8b, and the inner yokes 9a and 9b). The objective lens 1 is axially moved in correspondence with a change in surface level of the optical disk, so that the beam spot follows the recording surface of the disk.

During tracking controll when a current is supplied to each of the tracking coils 5a, 5b, 5c and 5d connected in series, in one direction or in the reverse direction thereof, an electromagnetic force acts about the support shaft 6 as rotation couple of forces in a gap formed between the left and right magnetic circuits, so that the beam spot traces the recording tracks in accordance with eccentricity of the tracks.

In the above conventional arrangementl however, when the lens holder 3 which holds the objective lens 1 is to be driven in the focusing or tracking direction, these movable actuator components such as the lens holder 3 resonate at a natural resonant frequency thereof, thereby adversely affecting servo control. A sub-resonance occurring at a high frequency range of several hundreds of Hz to several tens of kHz causes degradation in accurate positioning (tracking of the beam spot for the changes in surface level of the disk and eccentricity of tracks) of the objective lens 4 and disables control.

US-A-4818066 discloses an objective lens driving device comprising a holding member for holding an objective lens, an intermediate support member spaced apart from the optic axis of the objective lens and constructed for rotation about a rotary support axis parallel to the optic axis, a parallel plate spring having one end thereof secured to the holding member and the other end thereof secured to the immediate support member, the parallel plate spring supporting the holding member for movement only in the direction of the optic axis of the objective lens relative to the intermediate support member, and driving means for driving the holding member in the direction of the optic axis of the objective lens and a direction perpendicular to the optic axis.

The present invention has been made in consideration of the above situation, and has as its object to provide a simple objective lens actuator capable of performing good control of the objective lens actuator and a reduction of sub-resonance amplitude in a simple manner.

According to the invention there is provided an object lens actuator having features as recited in claim 1.

In the accompanying drawings:
Fig. 1 is a plan view showing an arrangement of a conventional objective lens actuator;
Fig. 2 is a longitudinal sectional view showing an arrangement of a balance weight of an objective lens actuator shown in Fig. 1;
Fig. 3 is a perspective view showing an assembly of an objective lens actuator according to an embodiment of the present invention;
Fig. 4 is a plan view showing the assembly of the objective lens actuator shown in Fig. 3;
Fig. 5 is a longitudinal sectional view showing an arrangement of a balance weight of the objective lens actuator shown in Figs. 3 and 4;
Figs. 6 and 7 are longitudinal sectional views showing balance weight arrangements of the balance weight shown in Fig. 5; and
Fig. 8 is a view showing a vibration model for explaining a theory of attenuation effect according to the present invention.

An embodiment of the present invention will be described with reference to the accompanying drawings. The same reference numerals as in the conventional arrangement denote the same parts in the following embodiment, and a detailed description thereof will be omitted.

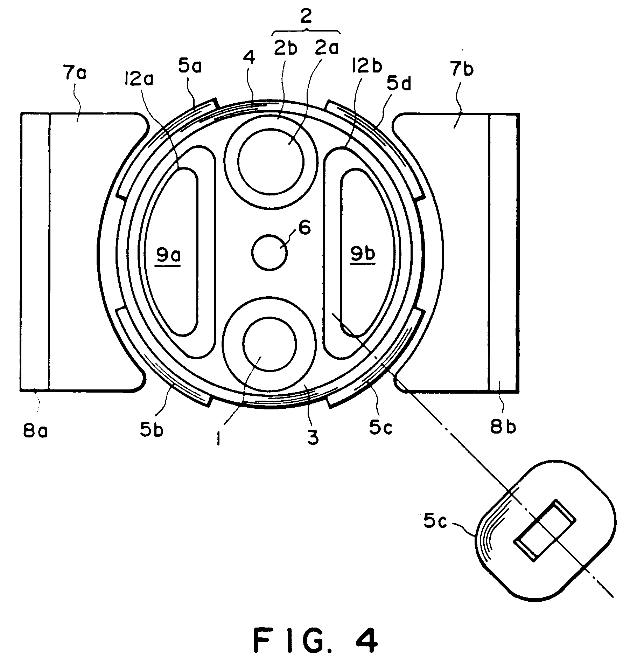

Fig. 3 is a perspective view showing an assembly of an objective lens actuator according to an embodiment of the present invention. Connecting yokes 10a and 10b connect an inner yoke 9a to an outer yoke 8a and an inner yoke 9b to an outer yoke 8b, respectively. A laser beam emitted from a laser source (not shown) passes a through hole 11 and is guided to an objective lens 1. The actuator comprises a balance weight body 2a and a damper member 2b for holding the balance weight body 2a to a lens holder 3. Note that the balance weight body 2a and the damper member 2b constitute a balance weight 2 as a whole. Fig. 4 is a plan view showing an assembly of Fig. 3.

An arrangement of the balance weight and its peripheral portion as a characteristic feature of the present invention is shown in Fig. 4. The balance weight comprises the cylindrical balance weight body 2a and held by the damper member 2b so as not to be in contact with the lens holder 3. The damper member 2b has predetermined viscoelastic properties.

The damper member 2b is made of natural rubber, an ether-based polyurethane, or the like. The damper member 2b can be elastically deformed so that the balance weight body 2a can be slightly displaced in the focusing direction (vertical direction) and the tracking direction (right-and-left direction) and provides a damping effect for a given vibration (especially resonance) in a high-frequency range of the lens holder 3 (movable actuator member).

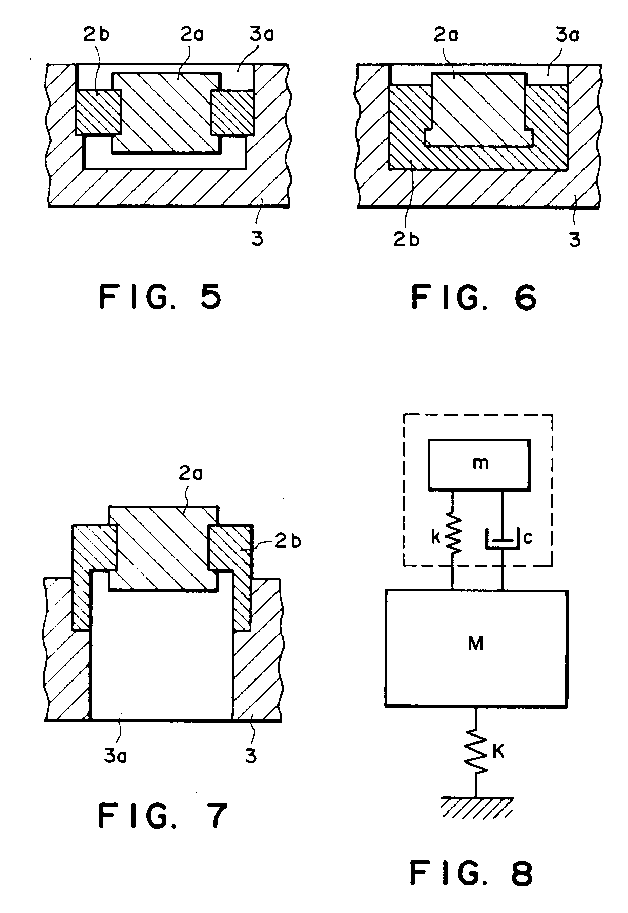

The damper member 2b may be a ring member which holds the balance weight body 2a which floats in a Sbalance weight mounting hole 3a of the lens holder 3, as shown in Fig. 5. However, a shown in Fig. 6, the balance weight body 2a may be supported to be surrounded within the balance weight mounting hole 3a including the bottom surface of the balance weight body 2a. Alternatively, a damper member 2b may extend upward to support the balance weight body 2a in the upper portion thereof, as shown in Fig. 7.

The theory of the damping effect according to the present invention will be described with reference to Fig. 8.

Fig. 8 is a view showing a model of a vibration system of the embodiment of the present invention.

A small vibration system (i.e., a portion surrounded by a dotted rectangle) is added to a mechanism (M). A mass m, a spring constant k, and a damping efficiency c of the system are properly selected to damp motion (vibration) of the mechanism (M).

The portion surrounded by the dotted lectangle corresponds to the balance weight 2 of the present invention.

As has been described above, since a balance weight comprises a balance weight body and a damper member for elastically supporting the balance weight body in a lens holder 3, the sub-resonance occurring during driving of the movable actuator members in the focusing or tracking direction can be damped, and accurate positioning and servo control of the objective lens can be performed. In addition, the objective lens actuator according to the present invention has a simple structure, low cost, and high reliability.

## Claims

1. An optical pick-up device for a compact disk player or an optical disk player, the device comprising an objective lens actuator provided with an objective lens (1), a holder (3) for holding the objective lens, a drive circuit (4, 5a, 5b, 5c, 5d, 7a, 7b, 8a, 8b, 9a, 9b) for causing the holder, held on a support shaft, to move the objective lens to focus a light beam on a recording medium, a balance weight member (2a, 2b) is provided on said holder to be substantially and axially symmetrical with said objective lens and which functions as a balance weight of the objective lens,
characterised in that said balance weight member comprises a weight member (2a) and an elastic damper member (2b) arranged in a balance weight cavity of said holder for surrounding and supporting said weight member on said holder by which a vibration of said holder is damped, said weight member being supported on said holder solely by said elastic damper member.

2. An optical pick-up device as claimed in claim 1, characterised in that said elastic member comprises a material having visco-elastic properties.

3. An optical pick-up device as claimed in claim 2, wherein the material of said elastic member is natural rubber.

4. An optical pick-up device as claimed in claim 2, wherein the material of said elastic member is ether-base polyurethane.

5. An optical pick-up device as claimed in any one of claims 1-4, characterised in that said damper member is a ring which surrounds and supports said weight member in the cavity (3a) of said holder.

6. An optical pick-up device as claimed in claim 5, characterised in that said damper member is formed so as to surround the weight member and to support the bottom surface thereof within said cavity.

7. An optical pick-up device as claimed in claim 5, characterised in that said damper member extends from the cavity above the upper surface of the holder and supports the weight member at its upper end.

## Patentansprüche

1. Eine optische Aufnehmereinrichtung für einen CD-Spieler oder einen optischen Plattenspieler, wobei die Einrichtung eine Antriebseinheit für eine Objektivlinse mit einer Objektivlinse (1), einer Halterung (3) zum Halten der Objektivlinse, einer Ansteuerschaltung (4, 5a, 5b, 5c, 5d, 7a, 7b, 8a, 8b, 9a, 9b) zum Bewegen der Objektivlinse durch die auf einer Trägerwelle gehaltene Halterung, um einen Lichtstrahl auf einem Aufzeichnungsmedium zu fokussieren, einem auf der Halterung vorgesehenen Ausgleichsgewichtsteil (2a, 2b), um im wesentlichen und axial symmetrisch zu der Objektivlinse zu sein, und das als ein Ausgleichsgewicht der Objektivlinse dient,
**dadurch gekennzeichnet**, daß
das Ausgleichsgewichtsteil ein Gewichtsteil (2a) und ein elastisches Dämpferteil (2b) aufweist, angeordnet in einem Ausgleichsgewichtshohlraum der Halterung, um das Gewichtsteil auf der Halterung zu umgeben und abzustützen, wodurch eine Schwingung der Halterung gedämpft wird, wobei das Gewichtsteil lediglich durch das elastische Dämpferteil auf der Halterung gestützt wird.

2. Eine optische Aufnehmereinrichtung nach Anspruch 1,
**dadurch gekennzeichnet**, daß
das elastische Teil ein Material mit viskoelastischen Eigenschaften aufweist.

3. Eine optische Aufnehmereinrichtung nach Anspruch 2, wobei es sich bei dem Material des elastischen Teils um Naturkautschuk handelt.

4. Eine optische Aufnehmereinrichtung nach Anspruch 2, wobei es sich bei dem Material des elastischen Teils um Polyurethan auf Etherbasis handelt.

5. Eine optische Aufnehmereinrichtung nach einem der Ansprüche 1 bis 4,
**dadurch gekennzeichnet**, daß
das Dämpferteil ein Ring ist, der das Gewichtsteil in dem Hohlraum (3a) der Halterung umgibt und abstützt.

6. Eine optische Aufnehmereinrichtung nach Anspruch 5,
**dadurch gekennzeichnet**, daß
das Dämpferteil ausgebildet ist, um das Gewichtsteil zu umgeben und die Bodenfläche desselben innerhalb des Hohlraums abzustützen.

7. Eine optische Aufnehmereinrichtung nach Anspruch 5,
**dadurch gekennzeichnet**, daß
sich das Dämpferteil aus dem Hohlraum bis über die Oberfläche der Halterung erstreckt und das Gewichtsteil an seinem oberen Ende abstützt.

## Revendications

1. Dispositif de captage optique pour un lecteur de disques compacts ou un lecteur de disques optiques, le dispositif comportant un actionneur de lentille d'objectif pourvu d'une lentille d'objectif (1), une monture (3) destinée à maintenir la lentille d'objectif, un circuit de commande (4, 5a, 5b, 5c, 5d, 7a, 7b, 8a, 8b, 9a, 9b) destiné à amener la monture, maintenue sur un arbre de support, à déplacer la lentille d'objectif pour focaliser un faisceau lumineux sur un support d'enregistrement, un élément à masse d'équilibrage (2a, 2b) étant prévu sur ladite monture de façon à être sensiblement et axialement symétrique avec ladite lentille d'objectif et fonctionnant en tant que masse d'équilibrage de lentille d'objectif,
caractérisé en ce que ledit élément à masse d'équilibrage comporte un élément à masse (2a) et un élément élastique d'amortissement (2b) disposés dans une cavité pour masse d'équilibrage de ladite monture afin d'entourer et de supporter ledit élément à masse sur ladite monture, grâce à quoi une vibration de ladite monture est amortie, ledit élément à masse étant supporté sur ladite monture uniquement par ledit élément élastique d'amortissement.

2. Dispositif de captage optique selon la revendication 1, caractérisé en ce que ledit élément élastique comprend une matière ayant des propriétés viscoélastiques.

3. Dispositif de captage optique selon la revendication 2, dans lequel la matière dudit élément élastique est un caoutchouc naturel.

4. Dispositif de captage optique selon la revendication 2, dans lequel la matière dudit élément élastique est un polyuréthanne à base d'éther.

5. Dispositif de captage optique selon l'une quelconque des revendications 1-4, caractérisé en ce que ledit élément d'amortissement est un anneau qui entoure et supporte ledit élément à masse dans la cavité (3a) de ladite monture.

6. Dispositif de captage optique selon la revendication 5, caractérisé en ce que ledit élément d'amortissement est formé de façon à entourer l'élément à masse et à supporter sa surface inférieure à l'intérieur de ladite cavité.

7. Dispositif de captage optique selon la revendication 5, caractérisé en ce que ledit élément d'amortissement s'étend depuis la cavité au-dessus de la surface supérieure de la monture et supporte l'élément à masse à son extrémité supérieure.
